Europäisches Patentamt

European Patent Office

Office européen des brevets

(11) Publication number: **0 665 093 A1**

# EUROPEAN PATENT APPLICATION

(21) Application number: **95101159.2**

(22) Date of filing: **27.01.95**

(51) Int. Cl.⁶: **B29C 45/67**

(30) Priority: **31.01.94 JP 27449/94**

(43) Date of publication of application:
**02.08.95 Bulletin 95/31**

(84) Designated Contracting States:
**DE FR GB IT**

(71) Applicant: **NISSEI ASB MACHINE CO., LTD.**
**4586-3, Koo,**
**Komoro-shi**
**Nagano-ken 384 (JP)**

(72) Inventor: **Takada, Minoru**
**3-2-56, Oaza-Tokida**
**Ueda-shi,**
**Nagano-ken (JP)**

(74) Representative: **Heim, Hans-Karl, Dipl.-Ing. et al**
**Weber & Heim**
**Patentanwälte**
**Irmgardstrasse 3**
**D-81479 München (DE)**

(54) **Apparatus and method of clamping mold.**

(57) A mold clamping apparatus which can rapidly close the mold includes a mold clamping cylinder (100) having a mold clamping ram (20) connected to a mold clamping plate (18) and an auxiliary cylinder (101) having a piston (22) interlocking with the mold clamping ram (20). The mold clamping cylinder (100) includes a first fluid chamber (30) for driving the mold clamping ram (20) forward and a second fluid chamber (32) for driving the mold clamping ram (20) backward. The auxiliary cylinder (101) includes a third fluid chamber (34) from which the hydraulic fluid is expelled as the piston (22) moves forward. The first fluid chamber (30) is connected to the third fluid chamber (34) through a fluid passage (36). When the pressure receiving area of the mold clamping ram (20) in the first fluid chamber (30) is S1 and that of the piston (22) in the third fluid chamber (34) is S2, the relationship is established to be S1>S2. When the mold clamping ram (20) is driven forward to close the mold, the first fluid chamber (30) receives the hydraulic fluid pumped by a pump (50) and expelled from the third fluid chamber (34) as the piston (22) moves forward. Thus, the mold can be closed rapidly by moving the mold clamping ram (20) forward based on the pressure receiving area difference (S1-S2).

FIG.I

## BACKGROUND OF THE INVENTION

### FIELD OF THE INVENTION

The present invention relates to an apparatus for clamping a mold in a molding machine and a method for clamping and closing a mold rapidly using such an apparatus, while maintaining the size of the machine small.

### DESCRIPTION OF THE PRIOR ART

It is generally desired that the time required to open or close a mold in the injection or blow molding process is reduced to shorten the molding time.

One of the mold clamping systems which can fulfill such a condition is a so-called straight-hydraulic mold clamping system.

In the straight-hydraulic mold clamping system a pressure generated by a hydraulic mechanism provides a direct force for rapidly moving and clamping the mold

The straight-hydraulic mold clamping system is classified into three types: (1) booster ram type, (2) auxiliary cylinder type and (3) pressure intensifier type. (See "Introduction of Plastic Molding and Machining" sixteenth edition, Nikkan Kogyo Shinbun-Sha, September 10, 1992: 131-134.)

The booster ram type mold clamping system comprises a reduced-diameter booster ram fixedly connected to a mold clamping cylinder at the bottom thereof. The booster ram is disposed at the center of a mold clamping ram so as to move the mold clamping ram at high speed.

The auxiliary cylinder type mold clamping system may comprise two sets of auxiliary cylinders in addition to a mold clamping ram. These auxiliary cylinders are used to move the mold clamping ram rapidly.

The pressure intensifier type mold clamping system comprises a mold clamping ram and a pressure intensifying ram which are connected in series. When the mold is closed, the hydraulic fluid is supplied to a mold clamping cylinder in which the mold clamping ram is mounted. On clamping the mold thereafter, the hydraulic pressure is also supplied to a pressure intensifying cylinder in which the pressure intensifying ram is mounted. Thus, the mold clamping force is increased.

Among the foregoing three types of the straight-hydraulic mold clamping system, the booster ram type and auxiliary cylinder type use a prefill valve for switching pressure required to move the mold clamping ram to pressure required to clamp the mold and vice versa. The prefill valve may be formed by a spool valve or on-off valve. When the spool is moved or the on-off valve is opened or closed, a fluid supply path is switched to another path.

On the other hand, the pressure intensifier type mold clamping system determines a ratio of intensification from a ratio of the internal diameter of the pressure intensifying cylinder to the external diameter of the pressure intensifying ram. The mold clamping pressure is based on the ratio of intensification and the hydraulic pressure applied to the pressure intensifying cylinder.

However, the straight-hydraulic mold clamping systems may require an increased space to house various mechanism and associated components.

More particularly, the prefill valve type system comprises a booster ram or auxiliary cylinder as well as a mold clamping ram which interlocks with a piston in the booster ram or auxiliary cylinder and whereby moves forward. Further, negative pressure generated during the mold clamping is used to fill the back fluid chamber of the mold clamping ram with a hydraulic fluid from a tank. Thereafter, the hydraulic fluid surplus to the amount of necessary for the mold clamping must be stored in the fluid tank so as to prevent air penetration into the hydraulic fluid. Increasing the volume of the fluid tank requires a larger space for installing the fluid tank. The fact that the fluid tank occupied area is relatively large in proportion to the entire space where the mold clamping device is located degrades the spatial efficiency.

When the mold clamping ram is moved to close the mold, the hydraulic liquid with high pressure is supplied to the mold clamping ram just before or after the mold halves contact each other. Before such liquid is supplied to the mold clamping ram, simply the hydraulic fluid is sucked from the back fluid chamber thereof under the negative pressure. Thus, a sudden change of pressure from negative to positive in the cylinder may result in shock or noise during the mold clamping.

Furthermore, providing fluid supply passages to the high-speed driving portion and mold clamping ram respectively as well as a mechanism for switching these passages complicates the structure of the system.

On the other hand, the pressure intensifier type system comprises a mold clamping ram and an intensifying ram, connected in series and occupies a large space. Therefore, the entire system increases and degrades the spatial efficiency.

In addition, since both the clamping and intensifying rams require a large supply of hydraulic fluid, the entire system needs much more hydraulic fluid. Thus, the amount of hydraulic fluid for obtaining a predetermined mold operation and a mold clamping force increases, and thus degrades the energy efficiency.

## SUMMARY OF THE INVENTION

It is therefore an object of the present invention to provide a mold clamping apparatus and method which can move the mold clamping ram rapidly with a simplified structure.

Another object of the present invention is to provide a mold clamping apparatus and method which can minimize shock and/or noise produced on mold clamping, and prevent air penetration into the fluid supply passages.

The present invention provides a mold clamping apparatus for driving a mold fixed to a mold clamping plate to close, clamp and open the mold, comprising:

a tank for storing a hydraulic fluid;

a pump for supplying the hydraulic fluid from said tank;

a mold clamping cylinder for moving a mold clamping ram connected to said mold clamping plate backwards and forwards, said mold clamping cylinder including a first fluid chamber for receiving the hydraulic fluid from said pump to drive said mold clamping ram forward on mold closing and clamping, and a second fluid chamber for receiving the hydraulic fluid from said pump to drive said mold clamping ram backward on mold opening;

an auxiliary cylinder for moving a piston interlocking with said mold clamping ram backwards and forwards, said auxiliary cylinder including a third fluid chamber from which the hydraulic fluid is expelled as said piston moves forward on mold closing and clamping, and to which the hydraulic fluid is introduced on mold opening;

a fluid passage connecting said first fluid chamber and said third fluid chamber; and

a relationship between a pressure receiving area $S1$ of said mold clamping ram within the first fluid chamber of said mold clamping cylinder and a pressure receiving area $S2$ of said piston within the third fluid chamber of said auxiliary cylinder being represented as $S1>S2$.

When the mold is closed, the first fluid chamber of the mold clamping cylinder can receive the hydraulic fluid from the pump as well as the hydraulic fluid expelled from the third fluid chamber of the auxiliary cylinder as the piston moves forward. Therefore, based on the difference between the pressure receiving areas $(S1-S2)$, the mold clamping ram can move forward so as to perform the mold closing step of the present invention. Since the first fluid chamber is replenished with the hydraulic fluid from the third fluid chamber, the hydraulic fluid supply from the tank through the pump may be relatively small corresponding to the pressure receiving area difference. Thus, the capacity of the tank can be small, and the system is miniaturized.

In one embodiment of the present invention, a plurality of mold clamping cylinders and/or auxiliary cylinders may be provided, In such a case, the system may comprise one or more mold clamping rams and one or more pistons. It is assumed that when the total pressure receiving area of one or more mold clamping rams is $\Sigma S1$ and that of one or more pistons is $\Sigma S2$, the relationship between $\Sigma S1$ and $\Sigma S2$ may be $\Sigma S1>\Sigma S2$. Thus, the mold can be closed rapidly as the mold clamping rams moves forward based on the pressure receiving area difference $(\Sigma S1 -\Sigma S2)$.

To accomplish the mold clamping step performed at the end of the mold closing step, it is preferred to provide a first valve means for opening and blocking the fluid passage. The first value means is open on mold closing and opening and is blocked on mold clamping. Thus, the hydraulic fluid from the third fluid chamber of the auxiliary cylinder can be blocked while continuing the supply from the pump to the first fluid chamber of the mold clamping cylinder. As a result, the mold closing speed can be slowed down and clamp the mold. Since the positive pressure is always exerted to the first fluid chamber, a sudden change at pressure from negative to positive as in the prior art does not occur. Since the interior of the cylinder is not exposed to any negative pressure, air does not penetrate into the fluid passage.

In addition, it is preferred to provide a second valve means for opening a drain passage between the third fluid chamber and the tank on mold clamping and for blocking the drain passage on mold closing and opening. Thus, an unnecessary hydraulic fluid flow from the third fluid chamber can be discharged into the tank so that the hydraulic fluid supply to the first fluid chamber is easily blocked.

It is also preferred that the total capacity of the first fluid chamber in the mold clamping step is larger than the total capacity of the third fluid chamber in the mold opening step. This is because when the mold is open, all the hydraulic fluid to be supplied to the third fluid chamber can be supplied with the hydraulic fluid from the first fluid chamber.

To decelerate the mold clamping ram in the mold clamping step, instead of blocking the hydraulic fluid supply from the third fluid chamber, the hydraulic fluid discharge from the second fluid chamber may be slowed down so that the discharge is slower than that in the mold closing step. For such a purpose, it is preferred to provide a third valve means for changing the sectional area of a drain flow passage between the second fluid chamber of the mold clamping cylinder and the tank. The third valve means can slow down the hydraulic fluid discharge from the second fluid chamber by reducing the sectional area so that the sectional area is smaller in the mold clamping step than in the mold closing step.

When one or more mold clamping cylinders are used with one or more mold clamping rams, the total pressure receiving area $\Sigma S3$ of one or more mold clamping rams in the second fluid chambers of the respective mold clamping cylinders is preferably smaller than the total pressure receiving area $\Sigma S1$ of the mold clamping rams in the first fluid chambers of the respective mold clamping cylinders. This is for opening the mold rapidly. Particularly, if the total pressure receiving area $\Sigma S3$ is substantially equal to the pressure receiving area difference ($\Sigma S1 - \Sigma S2$), the opening speed of the mold can be substantially equal to the closing speed.

The auxiliary cylinder also includes a further chamber located opposite to the third fluid chamber with the piston between, and the chamber communicates with the atmosphere through an opening so that the piston therein can more smoothly. Its further preferred that the opening communicates with the atmosphere in the tank. Therefore, the hydraulic fluid leaked from the third fluid chamber to the chamber having the opening can be returned to the tank through the opening.

It is further preferred that a plurality of said pistons are connected to the mold clamping plate where the pistons are linearly symmetrical to the axis of the mold clamping ram. Alternatively, a plurality of said mold clamping rams may be connected to the mold clamping plate at where the rams are linearly symmetrical to the axis of the piston. In any event, the load on the mold clamping plate is not offset. The mold can be closed and opened with the mold clamping force being transmitted to the mold in a straight line.

## BRIEF DESCRIPTION OF THE DRAWINGS

Fig. 1 is a schematic cross-section of a mold clamping apparatus embodied in an injection molding machine and a mold closing step thereof according to the present invention.

Fig. 2 is a schematic cross-section of the mold clamping apparatus shown in Fig. 1 and a mold clamping step thereof.

Fig. 3 is a schematic cross-section of the mold clamping apparatus shown in Fig. 1 and a mold opening step thereof.

Fig. 4 is a schematic cross-section of a mold clamping apparatus embodied in a blow molding machine according to the present invention.

Fig. 5 is a diagrammatical circuit diagram of a hydraulic circuit in the mold clamping apparatus of Fig. 4.

Fig. 6 is a diagrammatical circuit diagram of the hydraulic circuit of Fig. 5 when the mold is closed.

Fig. 7 is a diagrammatical circuit diagram of the hydraulic circuit of Fig. 5 when the mold is clamped.

Fig. 8 is a diagrammatical circuit diagram of the hydraulic circuit of Fig. 5 when the mold is open.

Fig. 9A is a diagrammatical view illustrating the principle of the rapid movement of the mold clamping apparatus in accordance with the present invention and Fig. 9B is a view illustrating the supply of hydraulic fluid on moving a mold clamping ram.

## DETAILED DESCRIPTION OF THE PREFERRED EMBODIMENTS

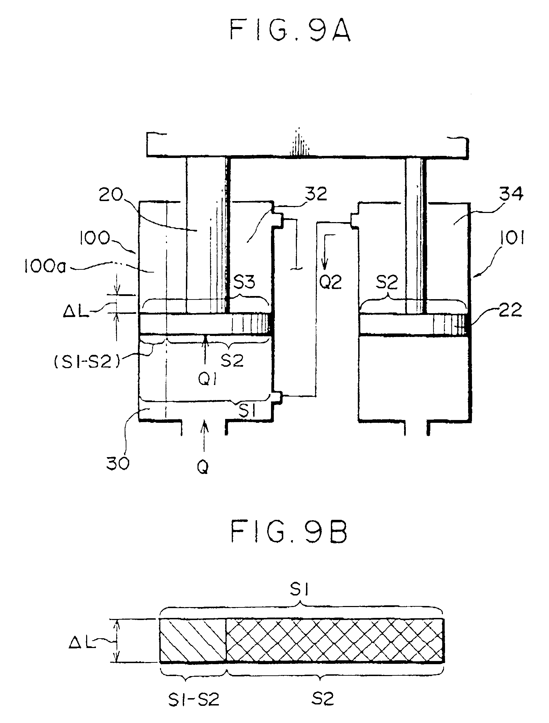

The principle of the rapid closing of the mold according to the present invention will be described with reference to Figs. 9A and 9B.

Referring first to Fig. 9A, a pressure receiving area S1 of a mold clamping ram 20 in a first fluid chamber 30 in a mold clamping cylinder 100 is larger than a pressure receiving area S2 of a piston 22 in a third fluid chamber 34 in an auxiliary cylinder 101. When the mold is closed, the first fluid chamber 30 used to move the mold clamping ram 20 forward communicates with the third fluid chamber 34 of the auxiliary cylinder 101. It is now assumed that the total hydraulic fluid flow into the first fluid chamber 30 is Q1 (cc/sec); the total hydraulic fluid discharge from the third fluid chamber 34 is Q2 (cc/sec); and the hydraulic fluid supply through an oil pump is Q (cc/sec), the following relationship is established:

$$Q1 = Q + Q2 \quad (1)$$

Assuming that the mold clamping ram 20 is to be moved by a distance $\Delta L$ per second, the volume of hydraulic fluid Q1 to be supplied to the first fluid chamber 30 per second corresponds to the hatched and the cross-hatched portions of Fig. 9B:

$$Q1 = \Delta L \times S1 \quad (2)$$

Since the piston 22 interlocking with the mold clamping ram 20 also moves by $\Delta L$ per second, the hydraulic fluid discharge Q2 from the third fluid chamber 34 becomes:

$$Q2 = \Delta L \times S2 \quad (3)$$

In other words, a relatively large volume of the hydraulic fluid corresponding to the cross-hatched portion of Fig. 9B is supplied from the auxiliary cylinder 101.

From the above formulas (1) - (3), the hydraulic fluid supply Q through the pump per second be-

comes:

$$Q = Q1 - Q2 = \Delta L \times (S1-S2) \qquad (4)$$

The hydraulic fluid supply Q by the pump per second may be less in proportion to the pressure receiving area difference (S1-S2) corresponding to the hatched portion of Fig. 9B. Thus, a relatively small oil pump can be used to close the mold. If the hydraulic fluid supply Q determined by the rating of the oil pump is constant, the movement or mold closing speed of the mold clamping ram per second becomes Q/(S1-S2). As the pressure receiving area difference decreases, the mold closing speed increases.

This provides the same result as when a high-speed cylinder 100a which drives the mold clamping ram 20 based on the pressure receiving area difference (S1-S2) as shown by a claim line in Fig. 9A is mounted within the mold clamping cylinder 100 of Fig. 9A.

The mold movement may be decelerated at the end of the mold closing step, by maintaining the hydraulic fluid supply Q to the first fluid chamber 30 through the oil pump while blocking the hydraulic fluid discharge Q2 from the third fluid chamber 34.

Thus, the constant hydraulic fluid supply Q from the pump may be represented by an equation as Q = (ΔL' x S1). As it is apparent from comparison with the formula (4), the movement of the mold clamping ram 20 per unit time (ΔL') is reduced. As a result, the mold clamping ram 20 can be slowed down to secure a desired mold clamping force.

Additionally, the mold clamping ram 20 may be slowed down, by decelerating the hydraulic fluid discharge from the second fluid chamber 32 in the mold clamping step rather than the mold closing step, in place of blocking the hydraulic fluid supply from the third fluid chamber 34. In such a case, an electromagnetic proportion valve for changing the sectional area of the flow passage may be located in the drain passage for the second fluid chamber 32 so as to control the hydraulic fluid flow velocity.

If a pressure receiving area S3 of the mold clamping ram 20 in the second fluid chamber 32 of the mold clamping cylinder 100 is relatively small when the mold clamping ram 20 moves in the direction of the mold opening, it is possible to reduce the hydraulic fluid supply from the pump per unit time, and open the mold rapidly. Particularly, if the pressure receiving area S3 is substantially equal to the pressure receiving area difference (S1-S2), the mold closing and opening speed can be substantially equal.

One embodiment of the present invention according to the aforementioned principle thereof will be described with reference to the drawings.

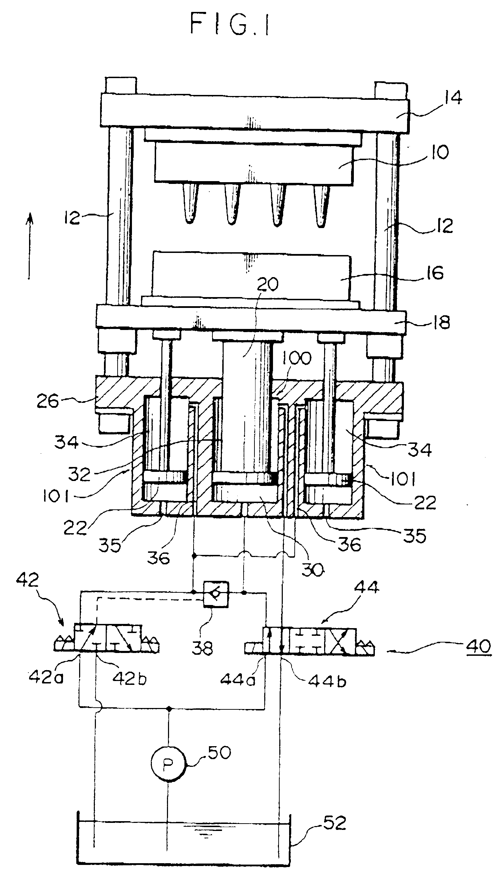

Figs 1 to 3 are cross-sectional views of a mold clamping apparatus which is applied to an injection molding machine according to the present invention.

Figs. 1 to 3 show the mold closing step, the mold clamping step and the mold opening step, respectively.

First of all, the structure of the mold clamping apparatus of this embodiment will be described with reference to Fig. 1.

The mold clamping apparatus comprises an injection molding core mold 10 mounted on a holding member 14 which is fixedly mounted on the upper ends of tie-bars 12, and an injection molding cavity 16 disposed opposite to the core mold 10.

The cavity mold 16 is mounted on a mold clamping plate 18 which slides vertically along the tie-bars 12 as illustrated in Fig. 1.

The mold clamping plate 18 includes a surface on which a mold clamping ram 20 and one ends of pistons 22 are axially disposed and the surface being opposite to the surface on which the cavity mold 16 is mounted.

In this embodiment, the mold clamping ram 20 is connected to the mold clamping plate 18 at a location opposite to the center of the cavity mold 16 at the bottom thereof. The pistons 22 are fixed to the mold clamping plate 18 at locations where they are linearly symmetrical to the mold clamping ram 20.

A machine base 26 includes a plurality of fluid chambers formed therein. One of the fluid chambers is a mold clamping cylinder 100 for receiving the mold clamping ram 20. The machine base 26 also includes two auxiliary cylinders 101 formed therein for receiving the pistons 22, respectively.

The mold clamping cylinder 100 includes a first fluid chamber 30 for driving the mold clamping ram 20 forward on closing the mold, and a second fluid chamber 32 for driving the mold clamping ram 20 backwards on opening the mold. In this embodiment, both the first and second fluid chambers 30, 32 are filled with the hydraulic fluid.

Each of the auxiliary cylinders 101 is divided into a third fluid chamber 34 and a further chamber by the head of the piston 22 with the piston rod extending along the longitudinal axis of the third fluid chamber 34. The third fluid chamber 34 is filled with the hydraulic fluid while the opposing chamber communicates with the atmosphere through an opening 35.

The machine base 26 further includes hydraulic fluid passages 36 connecting between the first fluid chamber 30 of the mold clamping cylinder 100 and the third fluid chamber 34 of each of the auxiliary cylinders 101. These hydraulic fluid passages 36 also connect the third fluid chambers 34 of the respective auxiliary cylinders 101, and further communicate with the first fluid chamber 30 through a check valve 38 which permits the hydraulic fluid to flow into the first fluid chamber 30.

In the mold clamping cylinder 100 and auxiliary cylinders 101 thus connected with one another, the relationship between the pressure receiving areas of the fluid chambers 30 and 34 is represented as:

$$S1 > \Sigma S2$$

where the pressure receiving area of the mold clamping ram 20 in the first fluid chamber 30 of the mold clamping cylinder 100 is S1, and the total pressure receiving area of the pistons 22 in the third fluid chambers 34 of the auxiliary cylinders 101 is $\Sigma S2$.

Thus, the mold clamping ram 20 is placed in the same state as when a high-speed cylinder 100a as shown in Fig. 9A is mounted until just before the mold operation begins to slow down during the mold closing step. The mold clamping ram 20 can move rapidly in the mold closing direction by applying an additional pressure.

The mold clamping apparatus further comprises a hydraulic circuit 40 for supplying and discharging the hydraulic fluid to and from the respective fluid chambers of the mold clamping and auxiliary cylinders 100, 101.

The hydraulic circuit 40 comprises an oil pump 50, a tank 52 and first and second directional control valves 42, 44 which are disposed in the fluid passages between the fluid chambers 30, 32 and 34.

In this embodiment, each of the first and second directional control valves 42, 44 is in the form of an electromagnetically driven selector valve which comprises an input port 42a or 44a connected to the oil pump 50 and a drain port 42b or 44b connected to the tank 52.

The first directional control valve 42 is used to connect or block the first fluid chamber 30 and the third fluid chambers 34.

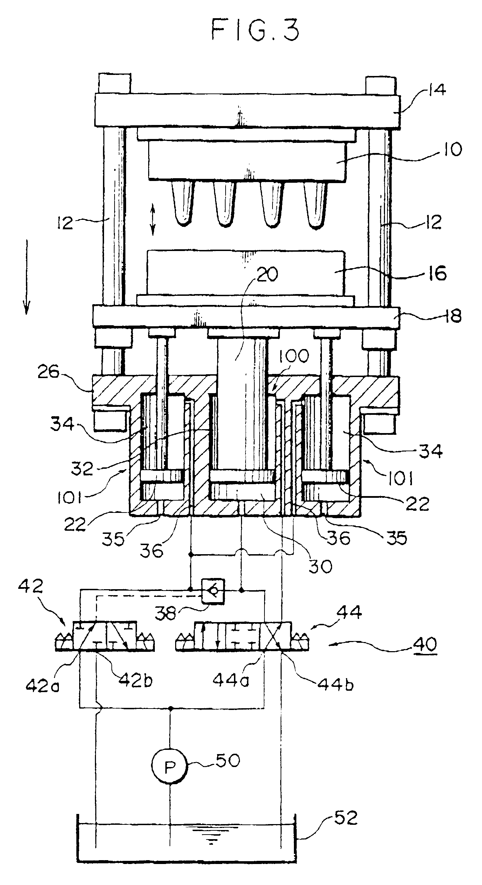

In the mold closing step of Fig. 1 and the mold opening step of Fig. 3, the input port 42a of the first directional control valve 42 is switched to apply a pilot pressure on the check valve 38. Under such a state, the hydraulic pressure is introduced from the oil pump 50 into the check valve 38 as a pilot pressure. Thus, check valve 38 is placed in a substantially communicating state. Such a communicating state means that when the pilot pressure is exerted, a member for closing the fluid passage such as a poppet valve is not closed completely but permits the hydraulic fluid flowing backwards and forwards. Therefore, the first fluid chamber 30 communicates with the third fluid chambers 34 through the fluid passages 36 and the check valve 38.

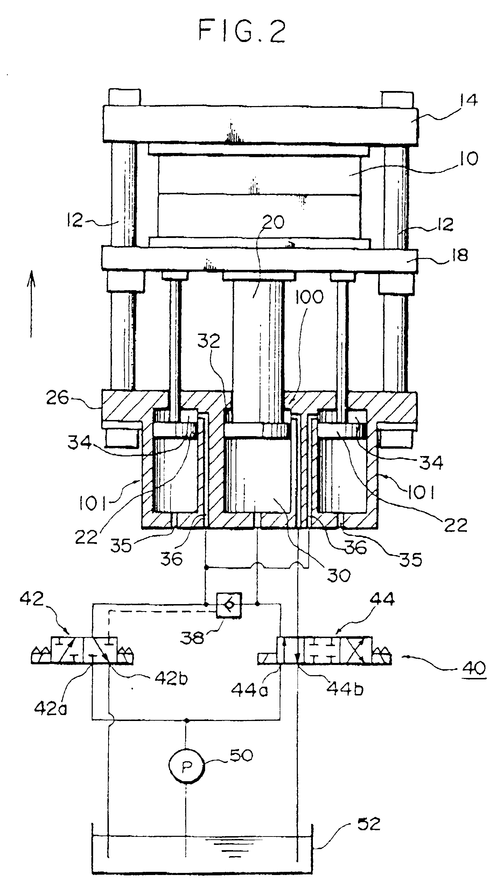

On the other hand, in the mold clamping step of Fig. 2, the input port 42a is closed, and the drain port 42b is connected to the fluid passage 36. In such a case, the check valve 38 blocks the passage between the first fluid chamber 30 and the third fluid chambers 34. The third fluid chambers 34 are connected to the tank 52 through the drain port 42b.

The second directional control valve 44 is used for applying the pressure required to reciprocate the mold clamping ram 20 and for exerting the mold clamping force.

In the mold closing step of Fig. 1, the input port 44a communicates with the first fluid chamber 30 so as to introduce the hydraulic fluid from the oil pump 50 into the first fluid chamber 30. The second fluid chamber 32 is connected to the tank 52 through the drain port 44b. The above condition of the second directional control valve 44 holds true for the mold clamping step of Fig. 2.

In the mold opening step of Fig. 3, the input port 44a is connected to the second fluid chamber 32, while the drain port 44b is connected to the first fluid chamber 30. In such a connection, the hydraulic fluid is introduced from the oil pump 50 into the second fluid chamber 32. The hydraulic fluid in the first fluid chamber 30 returns to the third fluid chambers 34 through the check valve 38, and the remaining fluid flows therefrom to the tank 52.

The details of the mold closing, clamping and opening steps of Figs. 1 to 3 will be described.

Mold Closing Step

In the mold closing step of Fig. 1, the hydraulic pressure from the oil pump 50 acts on the check valve 38 as a pilot pressure through the input port 42a. Thus, the check valve 38 is placed in a substantially communicating state, and enables the first fluid chamber 30 to communicate with the third fluid chambers 34.

On the other hand, the hydraulic fluid is introduced from the oil pump 50 into the first fluid chamber 30. Further, the hydraulic fluid is expelled from the second fluid chamber 32, and flows into the tank 52 through the drain port 44b of the directional control valve 44.

On closing the mold, the hydraulic fluid from the pump 50 also tends to flow into the third fluid chambers 34 since the check valve 38 is open.

Actually, however, the hydraulic fluid does not penetrate into the third fluid chambers 34. When the input port 44a of the second directional control valve 44 is connected, the pressure on the mold clamping ram 20 in the first fluid chamber 30 having its pressure receiving area larger than those of the third fluid chambers 34 increases so as to initiate the upward movement of the mold clamping ram 20. The pistons 22 are thus moved to expel the hydraulic fluid from the third fluid chambers 34. The expelled hydraulic fluid then flows into the first fluid chamber 30 through the check valve 38.

To move the mold clamping ram 20 forwardly for closing the mold, the hydraulic fluid flow shown by $Q = \Delta LX(S1-S2)$ in Fig. 9B may be supplied to the first fluid chamber 30 through the pump 50. As described, this is because the hydraulic fluid flow equals to $Q2 = \Delta L \times S2$ is supplemented from the third fluid chambers 34. Thus, the mold clamping ram 20 can more rapidly according to the aforementioned principle of the present invention.

Mold Clamping Step

At the end of the mold closing step, the first directional control valve 42 is switched as shown in Fig. 2. Thus, any pilot pressure does not act on the check valve 38, and the communication between the first and third fluid chambers 30, 34 is blocked. The hydraulic fluid is not supplied from the third fluid chambers 34 to the first fluid chamber 30, and flows to the tank 52 through the drain port 42b. As a result, the hydraulic fluid supplied to the first fluid chamber 30 is reduced to the constant level Q from the pump 50, and the mold closing speed in the mold clamping ram 20 is slowed down. Thus, the mold closing speed can be reduced only by the mold clamping mechanism without any special mechanism.

The above operation is continued after the injection cavity mold and injection core mold are engaged with each other. Thereafter, the pressure in the first fluid chamber 30 increases so as to apply pressure required to clamp the molds since a reaction force acts on the mold clamping ram 20.

Mold Opening Step

As the mold clamping step and the molding process subsequent to the mold clamping step is terminated, the first and second directional control valves 42, 44 are switched as shown in Fig. 3. As a result, the pilot pressure acts on the check valve 38 to place it in the substantially communicating state. At the same time, the hydraulic fluid is introduced from the oil pump 50 into the second fluid chamber 32 while the hydraulic fluid is expelled from the first fluid chamber 30.

Thus, the mold clamping ram 20 moves backwards and the pistons 22 connected to the mold clamping plate 18 are also move backwards.

Most of the hydraulic fluid expelled from the first fluid chamber 30 flows into the third fluid chambers 34 through the fluid passage 36 and check valve 38, and the remaining fluid flows therefrom to the tank 52 through the drain part 44b.

Since the volume of the first fluid chamber 30 in the mold clamping step is larger than the total volume of the third fluid chambers 34 in the mold opening step, the hydraulic fluid sufficiently returns to the third fluid chambers 34. The operation speed in the cylinders can be increased since the hydraulic fluid is fed from the oil pump 50 into the second fluid chamber 32.

In such a manner, this embodiment can provide the same advantage as when a high-speed movable cylinder is incorporated into the mold clamping cylinder by simply setting the pressure receiving area on the mold clamping ram within the first fluid chamber 30 to be slightly larger than the pressure receiving area on the pistons in the third fluid chambers 34. In addition, small volume of hydraulic fluid Q corresponding to the pressure receiving area difference may be supplied to the first fluid chamber 30.

Unlike the prior art in which the hydraulic pressure in the mold clamping cylinder changes rapidly from bringing the pressure negative, according to this embodiment constant pressure or positive hydraulic pressure may be applied to the first fluid chamber 30 as soon as the mold clamping ram 20 starts to move forward.

In this embodiment, further, the pistons 22 are forced to interlock with the mold clamping ram 20. The pressure within the third fluid chambers 34 is not brought negative. Thus, the air does not penetrate into the hydraulic circuit since the hydraulic fluid is forcibly expelled from the cylinders.

The mold clamping apparatus of the present invention may similarly be applied to a blow molding machine.

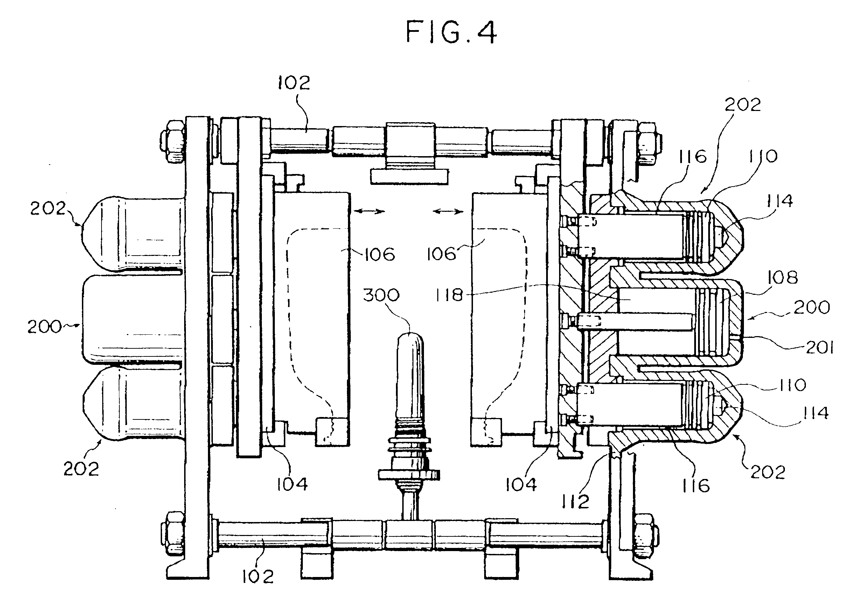

Fig. 4 is a fragmentary cross-section of a blow molding machine to which the mold clamping apparatus of the present invention is applied.

The blow molding machine of Fig. 4 is used to blow mold a bottle from an injection molded preform 300. The blow molding machine comprises upper and lower tie-bars 102 by which mold clamping plates 104 are supported for sliding along the tie-bars 102. A blow mold half 106 is mounted on each of the mold clamping plates 104.

Each of the mold clamping plates 104 includes a piston 108 fixedly mounted thereon for horizontal reciprocation. The piston 108 is included in an auxiliary cylinder 200. Each of the mold clamping plates 104 also includes mold clamping cylinders 202 each of which receives a sliding mold clamping ram 110. The mold clamping cylinders 202 are disposed vertically symmetrical to the auxiliary cylinder 200.

The auxiliary and clamping cylinders 200, 202 are arranged in such a manner so that a uniform pressure is exerted in the longitudinal direction of mold such that the mold halves will not incidentally be separated from each other when the preform 300 is blow molded.

The cylinders 202, 200 are fixedly mounted on a machine base 112 of the blow molding machine.

Like the mold clamping cylinder 100 of Fig. 1, each of the mold clamping cylinders 202 comprises a first fluid chamber 114 for driving the mold clamping ram 110 forwards on closing the mold halves and a second fluid chamber 116 disposed on the opposite side of the mold clamping ram 110. Both the first and second fluid chambers 114 and 116 are filled with the hydraulic fluid.

The auxiliary cylinder 200 comprises a piston 108 in which a third fluid chamber 118 is filled with the hydraulic fluid and a further chamber disposed on the opposite side of the piston 108 communicating with the atmosphere through an opening 201.

The first fluid chambers 114 are connected to the third fluid chamber 118 through a fluid passage (not shown) which corresponds to the fluid passage 36 in Fig. 1.

The relationship between the pressure receiving areas of the fluid chambers in the clamping and auxiliary cylinders 202, 200 are as the relationship between the pressure receiving areas illustrated in Fig. 1. More particularly, this relationship is represented by,

$$\Sigma S1 > S2$$

where the total pressure receiving area of the first fluid chambers 114 is $\Sigma S1$, and the pressure receiving area of the third fluid chamber 118 is S2.

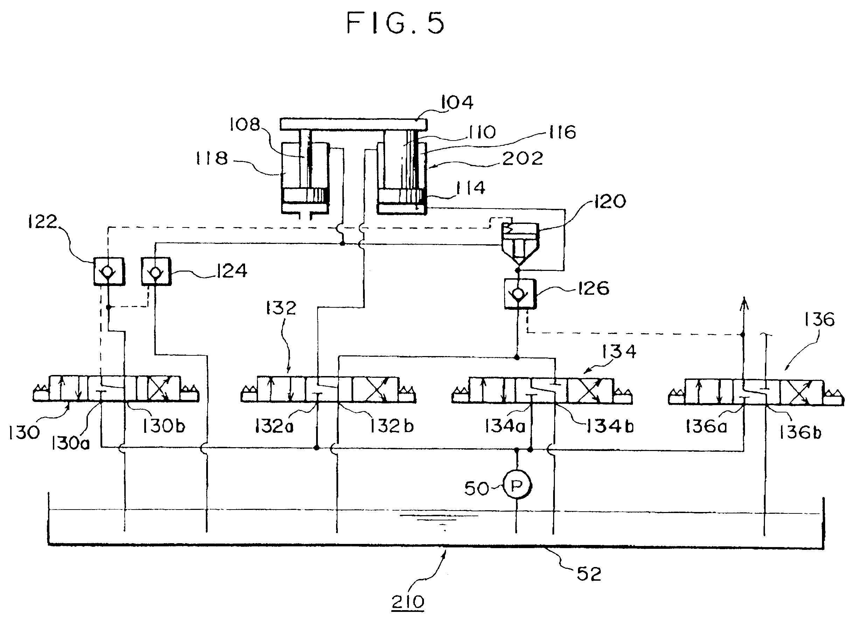

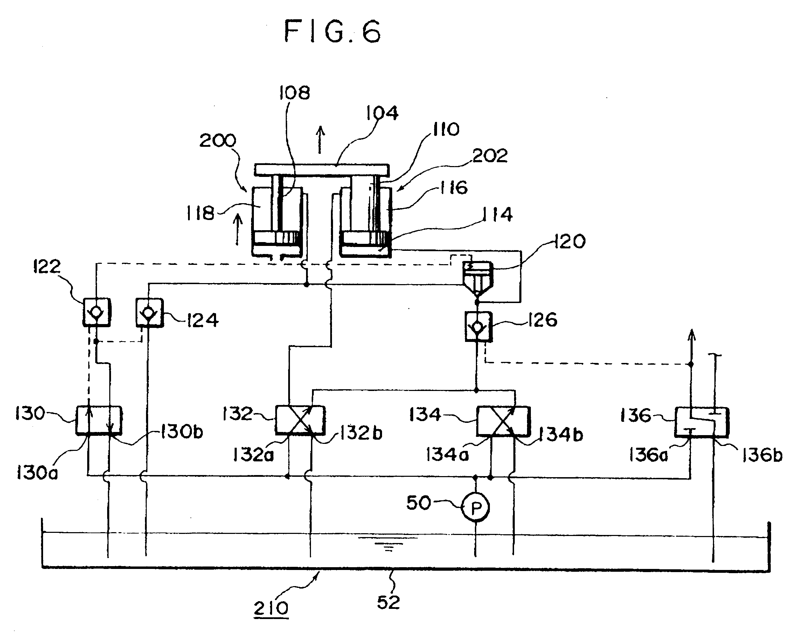

A hydraulic circuit 210 usable in the mold clamping apparatus of Fig. 4 will be described with reference to Figs. 5 to 8. Figs. 5 to 8 schematically show one of the four mold clamping cylinders 202 and one of the two auxiliary cylinders shown in Fig. 4. Fig. 5 shows the entire arrangement of the hydraulic circuit 210 while Figs. 6 to 8 show the hydraulic circuit 210 in the mold closing, clamping and opening steps, respectively.

Referring to Fig. 5, the auxiliary and mold clamping cylinders 200, 202 are connected to the oil pump 50 and tank 52 through an on-off valve 120, first to third check valves 122, 124 and 126, and first to fourth directional control valves 130, 132, 134 and 136.

Only when a pilot pressure is not applied, the on-off valve 120 connects the first fluid chamber 114 to the third fluid chamber 118. The first to third check valves 122 to 126 permit only the upstream of hydraulic fluid as viewed in Fig. 5. Only when the pilot pressure is exerted, these check valves permit the hydraulic fluid to flow in either direction.

The first directional control valve 130 controls the shifting of the on-off valve 120 and also that of a drain passage between the third fluid chamber 118 and the tank 52. The second directional control valve 132 controls the shifting of the fluid supply passage and the drain passage between the second fluid chamber 116 and the tank 52. The third directional control valve 134 controls the shifting of the fluid supply passage and the drain passage between the first fluid chamber 114 and the tank 52. The fourth directional control valve 136 controls hydraulic pressure in a stretch rod driving portion of the blow molding machine. In this embodiment, the fourth directional control valve 136 also controls drain passages between the first fluid chamber 114 and the tank 52.

The mold closing, clamping and opening steps controlled by the hydraulic circuit 210 will be described in detail with reference to Figs. 6 to 8.

Mold Closing Step

Fig. 6 shows the connection of the hydraulic circuit 210 in the mold closing step. The hydraulic fluid from the pump 50 flows into the first fluid chamber 114 through the input port 134a of the third directional control valve 134 and the third check valve 126. Thus, the mold clamping ram 110 moves forward in the mold clamping cylinder 202 to initiate the mold closing step. When the mold clamping plate 104 is moves forward, the piston 108 also moves forward as a unit in the auxiliary cylinder 200. As the piston 108 moves forward the hydraulic fluid is expelled from the third fluid chamber 118.

At this point, the on-off valve 120 in the fluid passage connecting the first fluid chamber 114 and the third fluid chamber 118 is open. In other words, the hydraulic fluid from the pump 50 flows to raise a valve member of the on-off valve 120 through the input ports 132a, 134a of the second and third directional control valves 132, 134 when the hydraulic fluid is fed into the first fluid chamber 114. The hydraulic pressure at the pilot port of the on-off valve 120 is discharged to the oil tank when the check valve 122 is opened by the pump pressure introduced from the input port 130a of the first directional control valve 130. Thus, the hydraulic fluid expelled from the third fluid chamber 118 through the upward movement of the piston 108 flows into the first fluid chamber 114 through the on-off valve 120. In the mold closing step, therefore, the mold can be closed rapidly based on the pressure receiving area difference between the mold clamping and auxiliary cylinders 202, 200, as in Fig. 1.

Mold Clamping Step

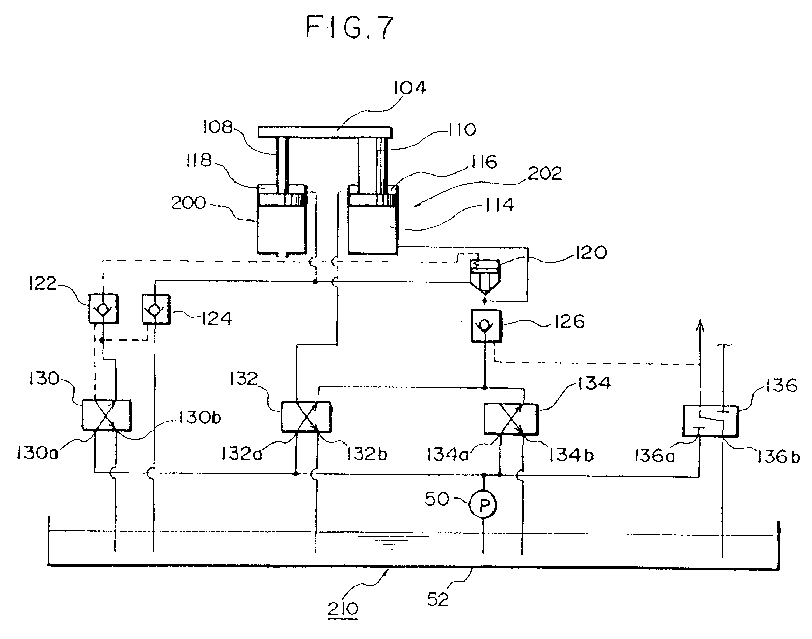

Fig. 7 shows the connection of the hydraulic circuit 210 in the mold clamping step. As it is apparent from contrast with Fig. 6, Fig. 7 is different from Fig. 6 only in the position of the first directional control valve 130. In the mold clamping step, the on-off valve 120 is closed since the fluid passage for applying the pilot pressure to the on-off valve 120 is open. Thus, the fluid passage between the first fluid chamber 114 and the third fluid chamber 118 is blocked. As a result, the first fluid chamber 114 does not receive the hydraulic fluid expelled from the third fluid chamber 118, and is driven by the hydraulic fluid from the pump 50. Therefore, the mold clamping ram 110 is slowed down. As in the first embodiment, the desired mold clamping force can be secured.

The hydraulic fluid expelled from the third fluid chamber 118 returns to the tank 52 through the second check valve 124.

Mold Opening Step

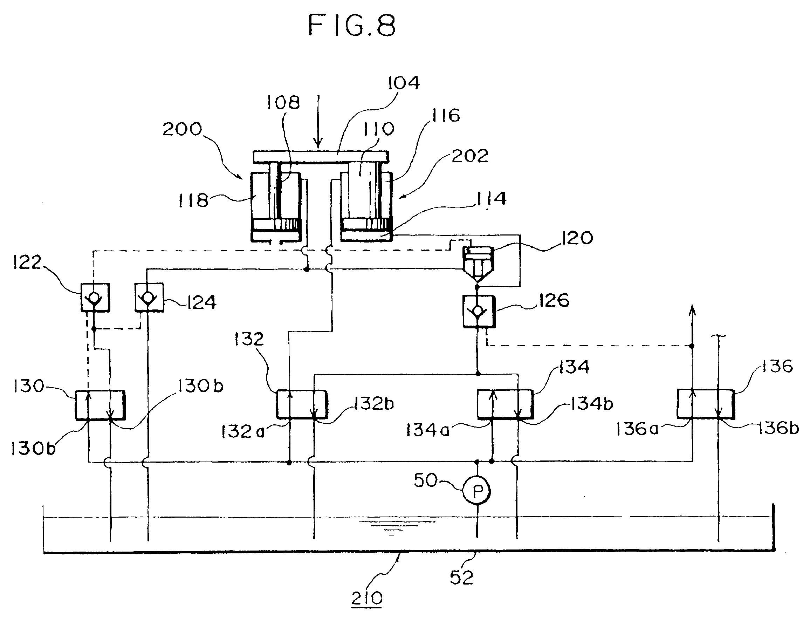

Fig. 8 shows the connection of the hydraulic circuit 210 in the mold opening step. In the mold opening step, the hydraulic pressure from the oil pump 50 acts on the second fluid chamber 116 through the input port 132a of the second directional control valve 132. The mold clamping ram 110 is then moves backwards in the mold clamping cylinder 202 to initiate the mold opening step. The mold clamping plate 104 moves backward and moves the piston 108 in the auxiliary cylinder 200 backwards with the mold clamping ram 110. At this point, the hydraulic fluid expelled from the first fluid chamber 114 flows to the tank 52 through the second and third directional control valves 132, 134 and also to the third fluid chamber 118 through the on-off valve 120. This is because the fluid passage connecting the first and third fluid chambers 114, 118 are open through the on-off valve 120.

The hydraulic fluid to be supplied to the third fluid chamber 118 with the backward movement of the piston 108 can be covered with a portion of the hydraulic fluid expelled from the first fluid chamber 114, and the remaining fluid is returned to the tank 52 through the third check valve 126 and the drain ports 132b and 134b of the second and third directional control valves 132, 134. At this point, the third check valve 126 receives the pilot pressure from the pump 50 through the input port 136a of the fourth directional control valve 136. Thus, the third check valve 126 is maintained open to secure the drain passage between the first fluid chamber 114 and the tank 52.

In this embodiment, the third check valve 126 opens as the stretch rod backs up from the molded article. For such a purpose, the fourth directional control valve 136 also functions as a selector valve for controlling the stretch rod.

**Claims**

1.  A mold clamping apparatus for driving a mold fixed to a mold clamping plate to close, clamp and open the mold, comprising:
    a tank for storing a hydraulic fluid;
    a pump for supplying the hydraulic fluid from said tank;
    a mold clamping cylinder for moving a mold clamping ram connected to said mold clamping plate backwards and forwards, said mold clamping cylinder including a first fluid chamber for receiving the hydraulic fluid from said pump to drive said mold clamping ram forward on mold closing and clamping, and a second fluid chamber for receiving the hydraulic fluid from said pump to drive said mold clamping ram backward on mold opening;
    an auxiliary cylinder for moving a piston interlocking with said mold clamping ram backwards and forwards, said auxiliary cylinder including a third fluid chamber from which the hydraulic fluid is expelled as said piston moves forward on mold closing and clamping, and to which the hydraulic fluid is introduced on mold opening;
    a fluid passage connecting said first fluid chamber and said third fluid chamber; and
    a relationship between a pressure receiving area S1 of said mold clamping ram within the first fluid chamber of said mold clamping cylinder and a pressure receiving area S2 of said piston within the third fluid chamber of said auxiliary cylinder being represented as S1>S2.

2.  A mold clamping apparatus as defined in claim 1 wherein one or both of said mold clamping cylinder and said auxiliary cylinder comprise a plurality of said respective cylinders and wherein the relationship between the total pressure receiving area $\Sigma$S1 of one or more mold clamping rams and the total pressure receiving area $\Sigma$S2 of one or more pistons is represented as $\Sigma$S1 > $\Sigma$S2.

3.  A mold clamping apparatus as defined in claim 1 or 2, further comprising first valve means for opening or blocking said fluid passage.

4.  A mold clamping apparatus as defined in claim 3, wherein said first valve means is open on mold closing and opening, and is blocked on mold clamping.

5. A mold clamping apparatus as defined in any one of claims 1 to 4, further comprising second valve means for opening a drain flow passage between said third fluid chamber and said tank on mold clamping and for blocking said drain flow passage on mold closing and opening.

6. A mold clamping apparatus as defined in claim 1 or 2, further comprising third valve means for changing the sectional area of a drain flow passage between said second fluid chamber and said tank, said third valve means reducing said sectional area so that said sectional area is smaller in a mold clamping step than in a mold closing step.

7. A mold clamping apparatus as defined in claim 1 or 2 wherein the total volume of the first fluid chambers of said mold clamping cylinders when the mold is clamped is larger than the total volume of the third fluid chambers of said auxiliary cylinders when said mold is open.

8. A mold clamping apparatus as defined in claim 2 wherein total pressure receiving areas $\Sigma S3$ of the mold clamping rams the second fluid chambers of one or more mold clamping cylinders are smaller than the total pressure receiving areas $\Sigma S1$ of the mold clamping rams in the first fluid chambers of said auxiliary cylinders.

9. A mold clamping apparatus as defined in claim 8 wherein said total pressure receiving area $\Sigma S3$ is substantially equal to the pressure receiving area difference $(\Sigma S1-\Sigma S2)$, whereby the mold closing speed can be substantially equal to the mold opening speed.

10. A mold clamping apparatus as defined in any one of claims 1 to 9 wherein said auxiliary cylinder includes a further chamber disposed opposite to said third fluid chamber with said piston between, said chamber communicating with the atmosphere through an opening.

11. A mold clamping apparatus as defined in claim 10 wherein said opening communicates with the atmosphere in said tank.

12. A mold clamping apparatus as defined in claim 2 wherein a plurality of said pistons are connected to said mold clamping plate where said pistons are linearly symmetrical to the axis of said mold clamping ram.

13. A mold clamping apparatus as defined in claim 2 wherein a plurality of said mold clamping rams are connected to said mold clamping plate where said rams are linearly symmetrical to the axis of said piston.

14. A method of clamping a mold fixedly mounted on a mold clamping plate in a molding machine comprising the steps of:

providing a mold clamping cylinder for moving a mold clamping ram connected to said mold clamping plate backwards and forwards, said mold clamping cylinder including a first fluid chamber for receiving a hydraulic fluid from a pump so as to drive said mold clamping ram having a pressure receiving area S1 forward on mold closing and clamping and a second fluid chamber for receiving the hydraulic fluid from said pump so as to drive said mold clamping ram backward on mold opening:

providing an auxiliary cylinder for moving a piston having a pressure receiving area S2 interlocking with said mold clamping ram in the forward and backward directions, said auxiliary cylinder including a third fluid chamber from which the hydraulic fluid is expelled as said piston moves on mold closing and clamping and into which the hydraulic fluid is introduced on mold opening:

closing said mold rapidly by supplying the hydraulic fluid pumped from said pump and the hydraulic fluid expelled from the third fluid chamber of said auxiliary cylinder as said piston moves forward to said first fluid chamber of said mold clamping cylinder so as to move said mold clamping ram based on a pressure receiving area difference (S1-S2).

15. A method as defined in claim 14, comprising the further step of providing one or both of said mold clamping cylinders and said auxiliary cylinders including a plurality of said respective cylinders and wherein said mold closing step includes moving said mold clamping ram forward based on pressure receiving area difference $(\Sigma S1-\Sigma S2)$ where the total pressure receiving area of said one or more mold clamping rams is $\Sigma S1$ and that of said one or more pistons is $\Sigma S2$.

16. A method as defined in claim 14 or 15, further comprising the step of clamping said mold by blocking the hydraulic fluid supply from said third fluid chamber so as to reduce the mold closing speed while continuing the supply from said pump to said first fluid chamber.

17. A method as defined in claim 16 wherein said mold clamping step includes discharging the hydraulic fluid from said third fluid chamber of said auxiliary cylinder into a tank communicating with said pump.

18. A method as defined in any one of claims 14 to 17, further comprising a mold opening step of said mold by supplying the hydraulic fluid from said pump to the second fluid chamber of said mold clamping cylinder after molding and moving said mold clamping ram backwards and wherein said mold opening step includes returning the hydraulic fluid expelled from said first fluid chamber as said mold clamping ram moves backwards to said third fluid chamber.

19. A method as defined in claim 18 wherein the total volume of the first fluid chambers of the mold clamping cylinders in the mold clamping step is larger than that of said third fluid chambers of said auxiliary cylinders in the mold opening step, and wherein said mold opening step includes covering all the hydraulic fluid to be returned to said third fluid chambers with the hydraulic fluid from said first fluid chambers.

20. A method as defined in claim 19 wherein said mold opening step includes discharging the hydraulic fluid remained of that which is expelled from said first fluid chamber and returns to the third fluid chambers into said tank.

21. A method as defined in any one of claims 18 to 20 wherein said mold opening step includes opening said mold rapidly by setting the total pressure receiving area $\Sigma S3$ of the mold clamping rams in the second fluid chambers of one or more mold clamping cylinders smaller than the total pressure receiving area $\Sigma S1$ of the mold clamping rams in the first fluid chambers of said mold clamping cylinders.

22. A method as defined in claim 21 wherein the total pressure receiving area $\Sigma S3$ is set to be substantially equal to the pressure receiving area difference ($\Sigma S1 - \Sigma S2$), whereby the mold closing speed can be substantially equal to the mold opening speed.

23. A method of clamping a mold fixedly mounted on a mold clamping plate in a molding machine comprising the steps of:

providing a mold clamping cylinder for moving a mold clamping ram connected to said mold clamping plate backwards and forwards, said mold clamping cylinder including a first fluid chamber for receiving a hydraulic fluid from a pump to drive said mold clamping ram having a pressure receiving area S1 forwards on mold closing and clamping and a second fluid chamber for receiving the hydraulic fluid from said pump to drive said mold clamping ram backwards on mold opening,

providing an auxiliary cylinder for moving a piston having a pressure receiving area S2 interlocking with said mold clamping ram backwards and forwards, said auxiliary cylinder including a third fluid chamber from which the hydraulic fluid is expelled as said piston moves on mold closing and clamping and into which the hydraulic fluid is introduced on mold opening,

closing said mold rapidly by supplying the hydraulic fluid pumped from said pump and the hydraulic fluid expelled from the third fluid chamber of said auxiliary cylinder as said piston moves forward to the first fluid chamber of said mold clamping cylinder so as to move said mold clamping ram based on a pressure receiving area difference (S1-S2); and

clamping said mold by changing hydraulic fluid discharge from said second fluid chamber so that said discharge is slower than that in said mold cloning step while continuing the hydraulic fluid supply from said pump to the first fluid.

# F I G . 1

EP 0 665 093 A1

# FIG.2

# FIG.3

FIG.4

# FIG.5

EP 0 665 093 A1

# FIG. 6

# FIG.7

# FIG.8

EP 0 665 093 A1

# FIG. 9A

# FIG. 9B

European Patent
Office

**EUROPEAN SEARCH REPORT**

Application Number

EP 95 10 1159

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO-A-88 09257 (KABUSHIKI KAISHA KOMATSU SEISAKUSHO)<br><br>* figures 3-6 * | 1-5,7,8, 10,12, 14-21,23 | B29C45/67 |
| X | PATENT ABSTRACTS OF JAPAN vol. 12 no. 448 (M-768) [3295] ,24 November 1988 & JP-A-63 179723 (KOMATSU) * abstract * | 1-5,7,8, 10,12, 14-21,23 | |
| A | EP-A-0 272 626 (HEHL)<br><br>* column 4, line 2 - line 17; figures * | 1,10,12, 14,18,23 | |

TECHNICAL FIELDS SEARCHED (Int.Cl.6)

B29C
B30B

The present search report has been drawn up for all claims

| Place of search | Date of completion of the search | Examiner |
|---|---|---|
| THE HAGUE | 11 May 1995 | Bollen, J |